# EUROPEAN PATENT SPECIFICATION

(11) **EP 1 291 268 B1**
(45) Date of publication and mention of the grant of the patent: **24.01.2007**
(21) Application number: 02078245.4
(22) Date of filing: 06.08.2002
(51) Int. Cl.: B62D 49/02, B62D 49/04

(54) **Agricultural vehicle**
Landwirtschafliches Fahrzeug
Véhicule agricole

(30) Priority: 08.09.2001 GB 0121742
(43) Date of publication of application: 12.03.2003
(73) Proprietor: CNH U.K. Ltd., Basildon Essex S14 3AD (GB)
(72) Inventor: Goddard, Roger W., Saffron Walden, Essex CB11 4UL (GB)
(74) Representative: Vandenbroucke, Alberic

(56) References cited:
- EP-A- 0 266 785
- DE-A- 3 301 847
- DE-A- 19 731 770
- US-A- 4 174 854

## Description

The present invention relates to an agricultural vehicle.

In conventional tractors, the chassis is constituted by the engine and transmission housing. The front and rear axles are fixed in relation to the chassis. In some cases, the cabin may be sprung relative to the chassis to afford some comfort to the driver or the front axle may be sprung but the read wheels and rear axle normally are not sprung. Because of the very large unsprung mass of the rear wheels, rear axle, engine and transmission, such tractors are not well suited to travel at speed along public roads.

Tractors that are better suited to travel along normal roads have been proposed, for example in GB-A-2.252.278, which have a chassis connected by a suspension to the wheels and wheel axles. In such tractors, as is the case with the more conventional tractors described above, the hitch assembly used for towing agricultural implements, such as a plough, is mounted directly on the axle, that is to say on the unsprung mass of the tractor.

US-A-5,404,958 discloses an agricultural tractor which includes an axle body and a vehicle substructure. A generally vertical lifting structure is rigidly attached to the vehicle substructure and engages a lifting frame which is adjustable in height. The lifting frame carries coupling and/or drive arrangements for implements. A hydraulic cylinder is arranged between the lifting frame and the axle body. The cylinder is connected to a hydro-pneumatic pressure reservoir and functions as an elastic spring support. A lock can be engaged to fix the lifting structure rigidly to the axle body. A transport lock can be selectively engaged to rigidly connect the lifting structure to the lifting frame. A selector valve selectively connects the pressure chamber of the hydraulic cylinder to either a hydro-pneumatic pressure reservoir or to a lifting control arrangement.

In US-A-4.174.854, a ripper is shown having a suspended rear axle. The suspension is either fully operational or fully locked as in the agricutural machine according to the preamble of claim 1.

It is an object of the present invention to facilitate control of a tractor hitch assembly through control of a tractor suspension mechanism.

According to the present invention, there is provided an agricultural vehicle having a sprung chassis, a rear axle assembly which forms part of the unsprung mass of the vehicle and is connected to the chassis by means of a hydraulic suspension, and a hitch assembly mounted on the chassis such that the hitch assembly forms part of the sprung mass of the vehicle when operating in a transport mode, the hydraulic suspension additionally having a working mode, in which the suspension is locked, in order to maintain the chassis at a fixed height relative to the rear axle assembly.

The invention is characterized in that the suspension has a further working mode in which suspension movements are not totally eliminated but their amplitude is limited.

In the present invention, when operating in transport mode the hitch and any implement attached to it forms part of the sprung weight of the vehicle, thereby enabling the vehicle to travel safely at speed along metalled roads surfaces. On the other hand, when the vehicle is in working mode, for example when it is used for towing a plough in a field, the chassis is locked by the suspension to the rear axle assembly, or only allowed a limited degree of movement and the ensemble behaves in the same or substantially the same manner as a conventional tractor having a rigid rear axle.

It is preferred that the suspension should have gas on oil struts so that the height of the chassis may be dynamically varied. In this case, by raising and lowering the suspension height, the struts of the suspension may be controlled dynamically based on a signal derived from a suitable sensor in order, for example, to maintain constant draught. Furthermore, by elimination of some of the gas accumulator capacity, the amplitude of suspension movements can be limited.

The invention will now be described further, by way of example, with reference to the accompanying drawings, in which :
Figure 1 is a schematic side view of a tractor of the invention, and
Figure 2 is a diagram to show the forces acting on a plough connected to a free linkage.

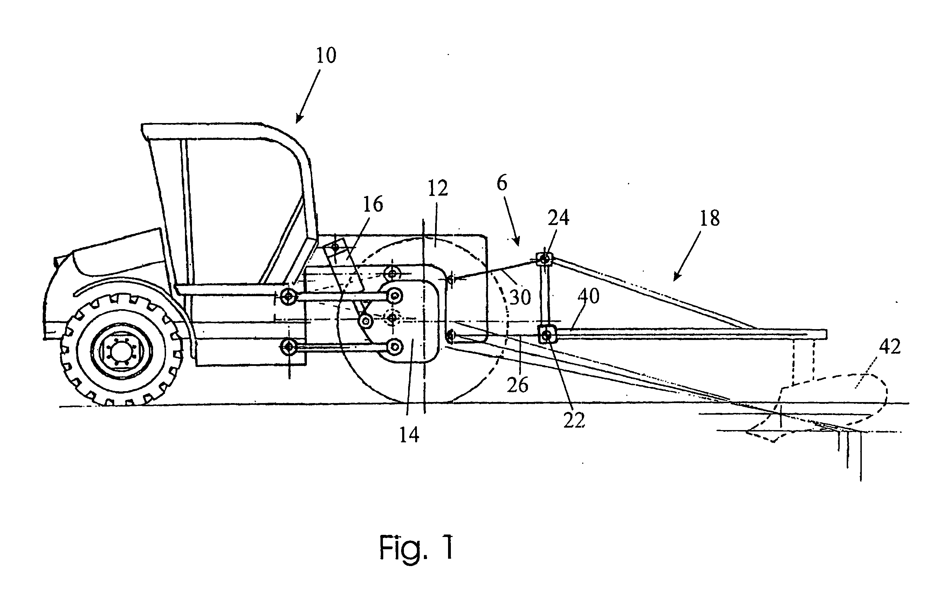

Referring first to Figure 1, a tractor generally designated 10 comprises a chassis 12 mounted on the rear axle 14 by means of a suspension 16 that comprises gas on oil struts. A hitch assembly 6 is mounted on the chassis 12 so as to form part of the sprung mass of the tractor 10. The hitch assembly 6 is designed for attachment of an implement, such as a plough 18 or another implement, which may be connected additionally to the power take-off shaft of the tractor 10.

The implement to be towed by the tractor 12 has a rigid frame 40 at its front end which is coupled to the hitch assembly at two lower forks 22 and an upper ring 24. The lower forks 22 are formed on the ends of arms 26 that are pivotably mounted on the chassis 12 at a point A. The ring 24 is arranged on the free end of a rod 30 of which the other end is pivotably mounted on the chassis 12.

The arms 26 are designed to be lowered and raised by a hydraulic system not shown in the drawings. When the tractor is in a working mode, that is when it is being used to tow an implement, the arms 26 are lowered, as illustrated. When the tractor is in a transport mode, that is when the implement is being carried from one working location to another, perhaps along a metalled road, the arms 26 are raised and the implement is carried clear of the ground. Hydraulic jacks (not shown) are provided for the purpose of raising and lowering the arms 26.

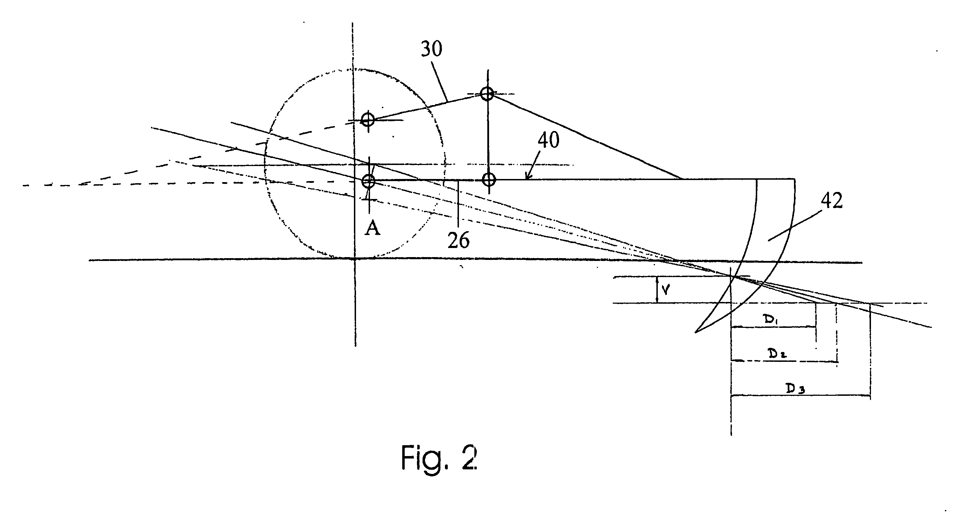

As is well known, when using a hitch in floating mode, as illustrated in the drawings, a plough will find its own working depth automatically. This will be explained briefly by reference to Figure 2 but reference is made also to an article on Page 200 of the issue of Farm Implement and Machinery Review published on 1 February 1966 for a fuller explanation.

In Figure 2, the rigid frame of the plough is designated 40 and the blades are designated 42. The forces acting on the plough comprise a vertical component V which is substantially constant and dependent upon such factors as the weight of the plough and soil reaction forces which may act upwards or downwards. The horizontal draught forces D1, D2 or D3 are dependent on ploughing depth, blade size and the nature of the soil. The horizontal draught force does not vary significantly with speed, provided the speed is within the normal working range for tillage equipment (4-14 kph).

The plough pivots about the pivot point A of the arms 26. A position of stable equilibrium of the blade 42 prevails when the line of action of the resultant of the horizontal and vertical force components passes through the pivot point A of the arms 26. If disturbed from this position, the forces acting on the blade will return it to this stable position in a similar manner to the forces on a pendulum. Thus, when the soil is easy to work, the blade will penetrate more deeply and conversely when working with harder soil the depth of the furrow will automatically be reduced.

The depth of the plough furrow can be altered by changing the geometry of the hitch. Thus by altering the position of the rod 30 relative to the bracket 32 it is possible to control the depth. To this end, provision may be made to enable the end of the rod 30 to be mounted in any of several different positions.

In the prior art, regardless of whether tractors have been constructed with or without a suspension, the hitch has been mounted on the unsprung mass, i.e. the hitch was always rigid with the rear axle. This has serious disadvantages in transport mode as it limits the speed at which the tractor can be driven. By contrast, in the present invention, the hitch is mounted on the chassis 12 and is therefore sprung in the transport mode. The plough can be raised off the ground using the jacks (not shown) of the hitch 6 and the tractor can travel safely at speed on metalled roads with the plough held clear of the ground.

When in working mode, the hydraulic suspension 16 of the tractor is used to prevent or limit movement of the chassis relative to the rear axle so that the tractor as a whole behaves in the same way as one without suspension.

Vehicle suspensions comprise a spring element and a shock absorbing or damping element. The spring element can be a leaf spring or a helical spring but in the case of a gas on oil struts it is formed by compressed air. The oil is used for damping and by pumping oil into the strut it can also be used to set the height of the chassis above the rear axle. The damping is effected by a double acting piston (one having working chambers on both sides) with means for throttling return flow from one of its working chambers to the other to vary the damping effect. When communication between the two working chambers is prevented completely, the suspension is effectively locked. If some of the gas accumulator capacity is eliminated, the maximum degree of movement of the suspension is limited.

A suspension with gas on oil struts can thus be used to set the height of the chassis above the rear axle, thereby raising and lowering all three points of the hitch. The height of the chassis can be set in this manner and maintained constant during ploughing, relying on the above described pendulum action of the three point hitch to determine the furrow depth.

Alternatively, by pumping oil into the struts, the height of the suspension may be controlled in a closed feedback loop to maintain constant draught. In this case, for example, the draught can be sensed and the chassis height varied in a direction to maintain the draught at a desired predetermined level.

## Claims

1. An agricultural vehicle (10) having a sprung chassis (12), a rear axle assembly (14) which forms part of the unsprung mass of the vehicle (10) and is connected to the chassis (12) by means of a hydraulic suspension (16), and a hitch assembly (6) mounted on the chassis (12) such that the hitch assembly (6) forms part of the sprung mass of the vehicle (10) when operating in a transport mode, the hydraulic suspension (16) additionally having a working mode, in which the suspension (16) is locked, in order to maintain the chassis (12) at a fixed height relative to the rear axle assembly (14); and
**characterized in that** the suspension (16) has a further working mode in which suspension movements are not totally eliminated but their amplitude is limited.

2. An agricultural vehicle according to claim 1, **characterized in that** the suspension (16) comprises gas on oil struts to enable the height of the chassis (12) to be dynamically varied.

3. An agricultural vehicle according to claim 2, **characterized in that** means are provided for controlling the height of the chassis (12) in the working mode in dependence upon a signal from a sensor responsive to an operating parameter of the towed implement.

## Patentansprüche

1. Landwirtschaftliches Fahrzeug (10) mit einem gefederten Fahrgestell (12), einer Hinterachs-Baugruppe (14), die einen Teil der ungefederten Masse des Fahrzeuges (10) bildet und mit dem Fahrgestell (12) über eine hydraulische Federung (16) verbunden ist, und eine Anbaukupplungs-Baugruppe (6) aufweist, die auf dem Fahrgestell (12) derart befestigt ist, dass die Anbaukupplungs-Baugruppe (6) einen Teil der gefederten Masse des Fahrzeuges (10) bildet, wenn dieses in einer Transport-Betriebsart betrieben wird, wobei die hydraulische Federung (16) zusätzlich eine Arbeits-Betriebsart aufweist, in der die Federung (16) verriegelt ist, um das Fahrgestell (12) in einer festen Höhe gegenüber der Hinterachs-Baugruppe (14) zu halten; und
**dadurch gekennzeichnet, dass** die Federung (16) eine weitere Arbeits-Betriebsart hat, in der Bewegungen der Federung nicht vollständig beseitigt sind, ihre Amplitude jedoch beschränkt ist.

2. Landwirtschaftliches Fahrzeug nach Anspruch 1, **dadurch gekennzeichnet, dass** die Federung (16) Gas-über-Öl-Druckzylinder umfasst, um eine dynamische Änderung der Höhe des Fahrgestells (12) zu ermöglichen.

3. Landwirtschaftliches Fahrzeug nach Anspruch 2, **dadurch gekennzeichnet, dass** Einrichtungen zur Steuerung der Höhe des Fahrgestells (12) in der Arbeits-Betriebsart in Abhängigkeit von einem Signal von einem Sensor vorgesehen sind, der auf einen Betriebs-Parameter des geschleppten Arbeitsgerätes anspricht.

## Revendications

1. Véhicule agricole (10) possédant un châssis suspendu (12), un essieu arrière (14) qui fait partie de la masse non suspendue du véhicule (10) et est relié au châssis (12) au moyen d'une suspension hydraulique (16), et un attelage (6) monté sur le châssis (12) de manière telle que l'attelage (6) fasse partie de la masse suspendue du véhicule (10) lors de son fonctionnement en mode transport, la suspension hydraulique (16) possédant, en outre, un mode travail dans lequel la suspension (16) est bloquée de manière à maintenir le châssis (12) à une hauteur fixe relativement à l'essieu arrière (14) : et
**caractérisée en ce que** la suspension (16) possède un autre mode de travail dans lequel les mouvements de la suspension ne sont pas totalement éliminés mais où leur amplitude est limitée.

2. Véhicule agricole selon la revendication 1, **caractérisé en ce que** la suspension (16) comprend des tirants à gaz sur huile de manière à permettre une variation dynamique de la hauteur du châssis (12).

3. Véhicule agricole selon la revendication 2, **caractérisé en ce que** des moyens sont prévus pour commander la hauteur du châssis (12) dans le mode travail en fonction d'un signal provenant d'un capteur réagissant à un paramètre opérationnel de l'outil tracté.
